# EUROPEAN PATENT APPLICATION

(11) **EP 1 769 943 A1**
(43) Date of publication of application: **04.04.2007**
(21) Application number: 05745860.6
(22) Date of filing: 01.06.2005
(51) Int. Cl.: B60C 9/18, B60C 11/00

(54) **TIRE FOR MOTORCYCLE**

(30) Priority: 16.07.2004 JP 2004210306
(71) Applicant: Bridgestone Corporation, Tokyo 104-8340 (JP)
(72) Inventor: NAKAMURA, Tsutomu, -1, Ogawahigashi-cho, Kodaira-shi, Tokyo (JP)
(74) Representative: Whalley, Kevin
(86) International application number: PCT/JP2005/010066
(87) International publication number: WO 2006/008876

(57) **Abstract**

There is provided a tire for motorcycle having a carcass as a bone structure extending between and connecting a pair of bead cores, at least one circumferential belt layer fabricated by spirally winding a cord along the circumferential direction of the carcass, and at least one inclined belt layer fabricated by arranging multiple cords extending obliquely with respect to the equatorial plane of the tire in parallel with each other, the circumferential and inclined belt layers being disposed radially outward of a crown portion of the carcass, wherein the circumferential belt layer has a distribution of placement density of cords which decreases from the equatorial plane toward the shoulder portion of the tire to, thereby, satisfy both of the high-speed durability and driving performance by improving various characteristics especially during cornering.

## Description

### TECHNICAL FIELD

The present invention relates to a tire for motorcycle, especially a motorcycle tire having superior high-speed durability and steering stability.

### RELATED ART

In recent years, while expressway networks have been developed and performance of motorcycles have been enhanced, the high-speed durability of the motorcycle tires needs to be improved. As a technique for improving the high-speed durability, patent documents 1-3 indicated below propose a tire in which a crown portion of its carcass is reinforced with a belt fabricated by spirally winding a cord along the circumferential direction. The belt of the spirally-winded cord can suppress a bulge near the center of the crown portion during high-speed running to, thereby, improve the high-speed durability.

However, it is difficult to sufficiently improve the rigidity of a shoulder portion by means of the reinforcement with the belt of the spirally-winded cord, so that the tire is lacking in the stiffness and the gripping force especially during cornering. As a result, the steering stability is impaired.

To deal with such a problem of the insufficient rigidity of the shoulder portion, the patent document 4 indicated below proposes a tire provided with a circumferential belt layer 3 located radially outward of a crown portion of a carcass 2 extending between and connecting a pair of bead cores 1, wherein cord layers fabricated by arranging multiple cords extending obliquely with respect to the equatorial plane O of the tire in parallel with each other are disposed on the outer periphery of the circumferential belt layer 3 and on each side with the equatorial plane O of the tire being as their border to form inclined belt layers 4a, 4b to, thereby, compensate the insufficient rigidity of the shoulder portion of the circumferential belt layer 3.
Patent document 1: JP 9-118109 A
Patent document 2: JP 10-81111 A
Patent document 3: JP 6-40210 A
Patent document 4: JP 2001-206009 A

### DISCLOSURE OF THE INVENTION

### PROBLEM TO BE SOLVED BY THE INVENTION

However, the addition of the above-mentioned inclined belt layer increases the bending stiffness of the shoulder portion too much as compared with that of the central region. Thus, it causes another problem that slipping behavior changes suddenly at the time of losing the grip, for example, when a large camber angle is applied.

Therefore, the present invention is directed to supply a tire for motorcycle having a spirally-winded belt which tire can satisfy both of the high-speed durability and driving performance by improving various characteristics especially during cornering.

### MEANS FOR SOLVING THE PROBLEM

More specifically, gist of the present invention is as follows:
(1) A tire for motorcycle having a carcass as a bone structure extending between and connecting a pair of bead cores, at least one circumferential belt layer fabricated by spirally winding a cord along the circumferential direction of the carcass, and at least one inclined belt layer fabricated by arranging multiple cords extending obliquely with respect to the equatorial plane of the tire in parallel with each other, the circumferential and inclined belt layers being disposed radially outward of a crown portion of the carcass, wherein the circumferential belt layer has a distribution of placement density of cords which decreases from the equatorial plane toward the shoulder portion of the tire.

(2) The tire for motorcycle according to the above item (1), wherein the circumferential belt layer has at least one region between the equatorial plane and the shoulder portion of the tire in which the placement density of cords varies, and the inclined belt layer is disposed at least a part corresponding to a region having low placement density of cords with the placement density-varying region being as the border.

(3) The tire for motorcycle according to the above item (2), wherein the inclined belt layer is disposed at least a part which corresponds to the region having low placement density of cords and the placement density-varying region.

(4) A tire for motorcycle having a carcass as a bone structure extending between and connecting a pair of bead cores, at least one circumferential belt layer fabricated by spirally winding a cord along the circumferential direction of the carcass, and at least one inclined belt layer formed by arranging cord layers on each side with the equatorial plane of the tire being as the border, the cord layers being fabricated by arranging multiple cords extending obliquely with respect to the equatorial plane of the tire in parallel with each other, and the circumferential and inclined belt layers being disposed radially outward of a crown portion of the carcass, wherein the circumferential belt layer has a central region having a width corresponding to a half of the entire tread width with the equatorial plane of the tire being as the center and side regions locating on both side thereof, the placement density of cords of center region is reduced to be 80% or less of that of the side regions in the width direction of the circumferential belt layer.

(5) The tire for motorcycle according to any one of the above items (1)-(4), wherein the inclined angle of the cord constituting the inclined belt layer is 20-80 degrees with respect to the equatorial plane of the tire.

(6) The tire for motorcycle according to any one of the above items (1)-(5), wherein the cord constituting the circumferential and inclined belt layers has resistance of incipient tension of 50 cN/cord or more.

(7) The tire for motorcycle according to any one of the above items (1)-(6), wherein the cord constituting the circumferential belt layer is made of steel, aromatic polyamide, polyethylene naphthalate, polyethylene terephthalate, grass fiber, rayon or aliphatic polyamide.

(8) The tire for motorcycle according to any one of the above items (1)-(7), wherein the cord constituting the inclined belt layer is made of aromatic polyamide, polyethylene naphthalate, polyethylene terephthalate, grass fiber, rayon or aliphatic polyamide.

(9) The tire for motorcycle according to any one of the above items (1)-(8), wherein the inclined belt layers have a split distance of 1-50 mm and total width of 70-150 % of the entire tread width.

(10) The tire for motorcycle according to any one of the above items (1)-(9), wherein modulus of the tread rubber is differentiated between a center region having a width corresponding to a half of the entire tread width with the equatorial plane of the tire being as the center and side regions locating on both sides thereof.

### EFFECT OF THE INVENTION

According to the present invention, various performance of a tire in which split-type inclined belt layer is arranged in combination with a circumferential belt layer fabricated with a spirally-winded cord can be improved especially during cornering by making placement density of cords of the side regions of the circumferential belt layer smaller than that of the center region. Thus, it is possible to provide a tire for motorcycle which satisfies both of the high-speed durability and driving performance.

### BRIEF DESCRIPTION OF THE DRAWINGS

[FIG. 1] FIG. 1 shows a belt structure of a conventional tire.
[FIG. 2] FIG. 2 shows a belt structure according to the present invention.
[FIG. 3] FIG. 3 shows another belt structure according to the present invention.

### BEST MODE FOR CARRYING OUT THE INVENTION

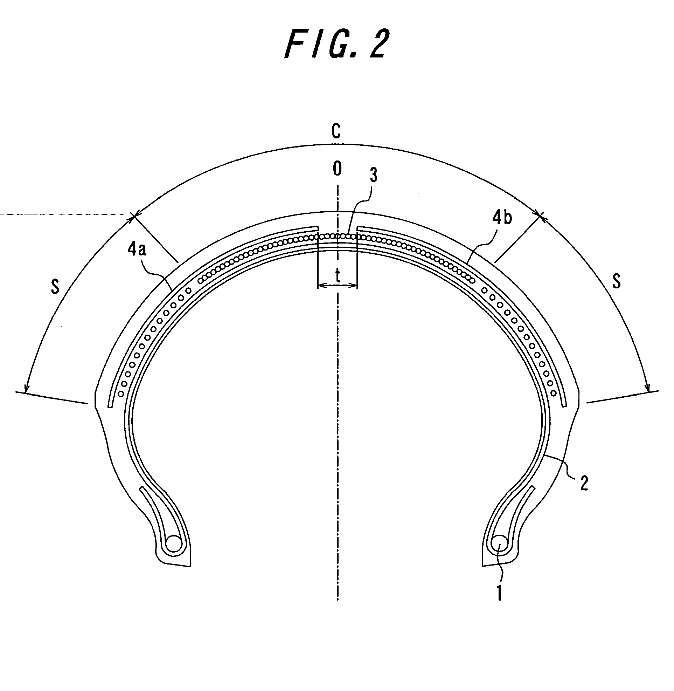

Next, a tire for motorcycle according to the present invention will be discussed in detail with reference to FIG. 2.
The tire shown in FIG. 2 has a carcass 2 extending between and connecting a pair of bead cores 1 and a belt which is disposed radially outward of a crown portion of the carcass 2 and which consists of a stack of a circumferential belt layer 3 and inclined belt layers 4a, 4b. The circumferential belt layer 3 is fabricated by spirally winding a cord along the circumferential direction of the carcass 2. The inclined belt layers 4a, 4b, which are arranged on the outer periphery of the circumferential belt layer 3, are formed by arranging multiple cords extending obliquely with respect to the equatorial plane O of the tire in parallel with each other to form cord layers and by spacedly disposing on each side with the equatorial plane O of the tire being as the border thereof.

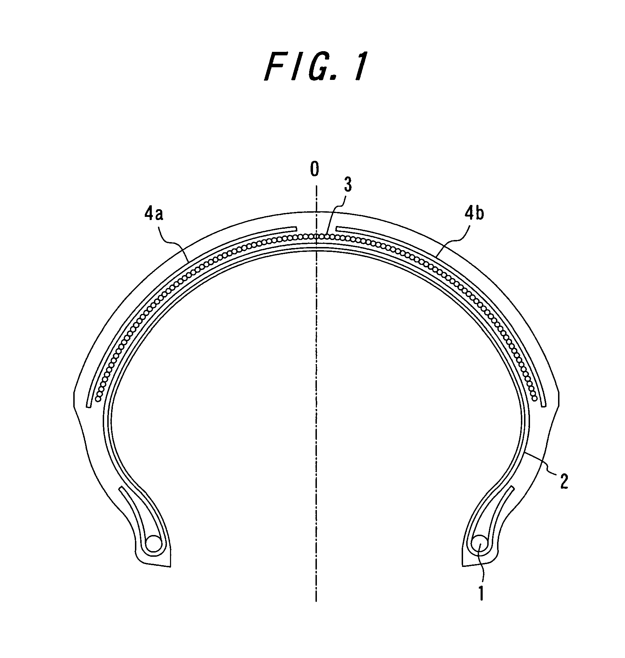

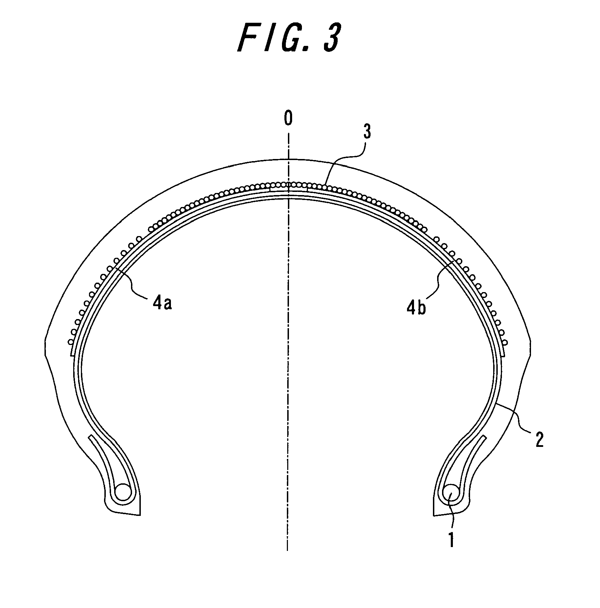

It will be appreciated that the inclined belt layers 4a, 4b are stacked radially outwardly on the circumferential belt layer 3 in the embodiment shown in FIG. 1, but the belt structure may be altered to stack the inclined belt layers 4a, 4b radially inwardly on the circumferential belt layer 3, as shown in FIG. 3.

Each of the circumferential and inclined belt layers consists of at least one layer, and especially the inclined belt layer may have a stacking structure of two or three layers from the viewpoint of improving tensile rigidity, compressive rigidity and flexural rigidity in the cross-sectional direction. On the other hand, the circumferential belt layer may have a stacking structure of two or three layers from the viewpoint of improving tensile rigidity, compressive rigidity and flexural rigidity in the circumferential direction.

The cords constituting the inclined belt layer preferably have inclined angle of 20-80 degrees with respect to the equatorial plane of the tire. When the inclined angel is less than 20 degrees, the effect of the inclined belt layer is nearly the same as that of the circumferential belt layer, and the effect on improving the strength in the cross-sectional direction, which is its intended purpose, may be small. On the other hand, when the inclined angle exceeds 80 degrees, the effect of the inclined belt layer is nearly the same as that of the carcass ply, and, that is, only the flexural rigidity can be improved but enhancement of strength due to a truss-like structure which is formed by inclining the cords may not be achieved.

Also, the inclined belt layers 4a, 4b preferably have a split distance t of 1-50 mm with the equatorial plane of the tire being as their border, and total width which is the sum of the widths of the split belt layers 4a, 4b of 70-150 % of the entire tread width. This is firstly because when the split distance t is less than 1 mm, the flexural rigidity of the inclined belt layers is close to that of unsplit belt layers and thus the flexural rigidity becomes too high to maintain a sufficient ground contact property. On the other hand, when the split distance t exceeds 50 mm, the flexural rigidity of the inclined belt layers becomes too low to maintain a sufficient rigid feeling and thus these layers do not contribute to improvement of the gripping force during cornering and the like.
Secondly, when the total width of the inclined belt layers is less than 70 % of the entire tread width, the flexural rigidity of the inclined belt layers becomes too low to maintain a sufficient rigidity and thus the belt layers do not contribute to improvement of the gripping force during cornering and the like. On the other hand, when the total width exceeds 150 % of the entire tread width, the inclined belt layers are laid beyond the shoulder regions and reach the bead regions, so that they are inferior in a basic performance as a belt layer.

Moreover, the cord constituting the circumferential and inclined belt layers may have resistance of incipient tension of 50 cN/cord or more. The term "incipient tension" used herein refers to the strength per cord in an initial state before the cord fatigues. The reason of setting the incipient tension of 50 cN/cord or more is that the cord having the strength of at least 50 cN/cord generally needs be used for bearing an external force as a bone member or a reinforcing member.

As the cord constituting the circumferential belt layer which satisfies the above-mentioned condition, various types of cords made of steel, aromatic polyamide, polyethylene naphthalate, polyethylene terephthalate, grass fiber, rayon or aliphatic polyamide may be applicable. On the other hand, as the cord constituting the inclined belt layers, various types of cords made of aromatic polyamide, polyethylene naphthalate, polyethylene terephthalate, grass fiber, rayon or aliphatic polyamide may be applicable.

The above-described belt structure enables to assure the high-speed durability and high-speed running stability by providing the circumferential belt layer 3 fabricated by spirally winding a cord, while it enables to compensate insufficient rigidity of the shoulder portions of the circumferential belt layer 3, which is a problem of the spirally-winded cord layer, by providing the inclined belt layers 4a, 4b split by the equatorial plane O of the tire. With such a belt structure, it is possible that the rigidity of the tread center region is lowered to assure the stability and the riding comfortability, especially the vibration absorbability during straight running while the rigidity against the cornering force during cornering is kept high to enhance the gripping force and the cornering force during cornering.

As discussed above, when the split inclined belt layers are added, the flexural rigidity of the shoulder portions becomes too high as compared with that of the center region and thus there is arisen a problem that the slipping behavior changes suddenly at the time of losing the grip, for example, when a large camber angle is applied. The problem is solved by imparting distribution to the placement density of cords of the circumferential belt layer in the width direction, i.e. distribution in which the placement density of cords is decreased from the equatorial plane of the tire toward the shoulder portion. More specifically, when the circumferential belt layer 3 is zoned into a center region C having a width corresponding to a half of the entire tread width with the equatorial plane O of the tire being as the center and side regions S on both sides thereof, as shown in FIG. 2, it may be important that the placement density of cords of the side regions S is reduced to 80 % or less of that of the center region.

With such distribution of the placement density of cords, it is possible to reduce the flexural rigidity of the shoulder portion to increase the ground contact property while maintaining the reinforcing effect of the inclined belt layers, so that it is effective to suppress the above-mentioned sudden slipping behavior. That is, if the placement density of cords of the side regions S is not reduced to 80 % or less of that of the center region, the flexural rigidity of the side regions S becomes too high to sufficiently assure a ground contact area necessary for cornering and thus a sufficient cornering force cannot be obtained. Contrarily, if the placement density of the center region is decreased, the resistance force against the traction cannot be sufficiently maintained. More preferably, the placement density of cords of the side regions S is 70-40 % of that of the center region.

It is noted that each of the placement densities of cords of the center region S and the side region S represent the average of the placement density of cords per unit length in respective regions and the average value in the side region S may be 80 % of that in the center region C. More specifically, the placement density of cords of the central region C is 25-30 pieces/25 mm in the case of aramid fiber cord (1000d/2) and 10-22 pieces/25 mm in the case of steel cord (1×5×0.21), as well as the placement density of cords of the side region S is 5-24 pieces/25 mm in the case of aramid fiber cord (1000d/2) and 3-17 pieces/25 mm in the case of steel cord (1×5×0.21).

The placement density of cords may also be differentiated between the center region C and the side regions S while it is constant in each region. Alternatively, the placement density of cords may be gradually decreased from the equatorial plane O toward the shoulder portion. When the placement density of cords is gradually decreased, the region in which the placement density of cords varies preferably has the width of 20-70 % of the entire tread width with the equatorial plane O of the tire. This is because when the region has the width of less than 20 % of the entire tread width, the rigidity of the center region is excessively decreased to deteriorate the stability, while when it has the width of more than 70 %, it is difficult to deal with the slipping behavior at a large camber angle.

In addition to the above-mentioned structure, by varying the modulus of the tread rubber of the above-mentioned center region C and the side regions S distinctively, it is possible to balance the performances during straight-running and cornering required for the motorcycle tire at a higher level. For example, when the high-speed durability, the durability against a severe condition of repeating so called stop-and-go, and the gripping force during cornering are desired to be simultaneously satisfied, the modulus of the tread rubber of the center region C is preferably larger than that of the side regions S. More specifically, the 300 % modulus of the tread rubber of the center region C is at least 20 percent larger than that of the side regions S.

On the other hand, the riding comfortability and the high-speed stability (including suppression of shimmy) during straight-running, and the gripping force during cornering are desired to be simultaneously satisfied, the modulus of the tread rubber of the center region C is preferably smaller than that of the side regions S. More specifically, the 300 % modulus of the tread rubber of the center region C is at least 20 percent smaller than that of the side regions S.

### EXAMPLES

Radial tires for motorcycle having belt structure shown in FIGS. 1-3 and specifications as shown in Tables 1 and 2 were experimentally produced. The size of the tire was 120/70ZR17 for the front tires and 190/50ZR17 for the rear tires. Common specifications other than those shown in Table 1 were as follow:
cord of the circumferential belt layer: aramid fiber cord 1670 dtex/2
cord of the inclined belt layer: aramid fiber cord 1670 dtex/2
inclined angle of the cord of the inclined belt layer : 45 degrees

The tires thus obtained were mounted on the rims with the sizes of MT 3.50x17 for the front tires and MT 6.00x17 for the rear tires and the internal pressures were adjusted to 250 kPa for the front tires and 290 kPa for the rear tires. Then, the tires mounted on the rim were equipped on a motorcycle of 1000 cc displacement and were subjected to the following tests. The results of the test are shown in Table 1 (front tire) and Table 2 (rear tire). It is noted that the values indicating the test results are indexed with the result of the Comparative Example 1 being set to 100, and the larger the value is, the better the performance is.

### [High-speed durability]

The high-speed durability was sensory evaluated for diverging/converging of the vibration when force acting about the axle of the handle was applied to the edge of the handle during high-speed straight running at 250 km/h or more.

### [Shimmy resistance]

The shimmy resistance was sensory evaluated for presence and magnitude of the vibration around the handle and for converging of the vibration when the motorcycle was coast at 100 km/h without holding the.

### [Handling performance]

The handling performance was sensory evaluated for operationability, linearity in the roll direction, capability of keeping a line during cornering and the line when the motorcycle was subjected to slaloming, lane-changing and cornering at various radius of curvature in the speed range of 30-200 km/h.

### [Corner grip performance]

The corner grip performance was sensory evaluated for ability of tracing the corner and retentivity of grip for the front tire as well as for ability of tracing the corner and retentivity of grip for the rear tire. Especially for the rear tire, it was sensory evaluated for retentivity of grip at the exit of the corner while increasing the throttle angle.

**[Table 1] Front tire**

| | | Comparative Example 1 | Comparative Example 2 (FIG. 1) | Example 1 (FIG. 2) |
|---|---|---|---|---|
| Inclined belt layer | Split distance t | - | 20 | 20 |
| | Total width (*1) | - | 140 | 140 |
| | Placement density (pieces/50 mm) | - | 36 | 36 |
| Circumferential belt layer | Average placement density A of center region (pieces/50 mm) | 60 | 60 | 60 |
| | Average placement density B of side region (pieces/50 mm) | 60 | 60 | 30 |
| | B/A | 1.0 | 1.0 | 0.5 |
| Modulus of tread rubber | Center region | 10 MPa | 10 MPa | 10 MPa |
| | Side region | 10 MPa | 10 MPa | 10 MPa |
| High-speed stability | | 100 | 80 | 100 |
| Shimmy resistance | | 100 | 100 | 100 |
| Handling performance | Operationability | 100 | 110 | 110 |
| | Neutrality | 100 | 90 | 100 |
| Corner grip | Highest limit | 100 | 120 | 125 |
| | Slipping controllability | 100 | 95 | 100 |

| | | | | |
|---|---|---|---|---|
| *1: ratio relative to the entire tread width | | | | |

**[Table 2] Rear tire**

| | | Comparative Example 1 | Comparative Example 2 (FIG. 1) | Example 1 (FIG. 2) |
|---|---|---|---|---|
| Inclined belt layer | Split distance t | - | 20 | 20 |
| | Total width (*1) | - | 200 | 200 |
| | Placement density (pieces/50 mm) | - | 36 | 36 |
| Circumferential belt layer | Average placement density A of center region (pieces/50 mm) | 60 | 60 | 60 |
| | Average placement density B of side region (pieces/50 mm) | 60 | 60 | 30 |
| | B/A | 1.0 | 1.0 | 0.5 |
| Modulus of tread rubber | Center region | 8 MPa | 8 MPa | 8 MPa |
| | Side region | 8 MPa | 8 MPa | 8 MPa |
| High-speed stability | | 100 | 80 | 130 |
| Shimmy resistance | | 100 | 100 | 100 |
| Handling performance | Operationability | 100 | 120 | 120 |
| | Neutrality | 100 | 95 | 110 |
| Corner grip | Highest limit | 100 | 120 | 125 |
| | Slipping controllability | 100 | 90 | 100 |

| | | | | |
|---|---|---|---|---|
| *1: ratio relative to the entire tread width | | | | |

## Claims

1. A tire for motorcycle having a carcass as a bone structure extending between and connecting a pair of bead cores, at least one circumferential belt layer fabricated by spirally winding a cord along the circumferential direction of the carcass, and at least one inclined belt layer fabricated by arranging multiple cords extending obliquely with respect to the equatorial plane of the tire in parallel with each other, the circumferential and inclined belt layers being disposed radially outward of a crown portion of the carcass, wherein
the circumferential belt layer has a distribution of placement density of cords which decreases from the equatorial plane toward the shoulder portion of the tire.

2. The tire for motorcycle according to claim 1, wherein the circumferential belt layer has at least one region between the equatorial plane and the shoulder portion of the tire in which the placement density of cords varies, and the inclined belt layer is disposed at least a part corresponding to a region having low placement density of cords with the placement density-varying region being as the border.

3. The tire for motorcycle according to claim 2, wherein the inclined belt layer is disposed at least a part which corresponds to the region having low placement density of cords and the placement density-varying region.

4. A tire for motorcycle having a carcass as a bone structure extending between and connecting a pair of bead cores, at least one circumferential belt layer fabricated by spirally winding a cord along the circumferential direction of the carcass, and at least one inclined belt layer formed by arranging cord layers on each side with the equatorial plane of the tire being as the border, the cord layers being fabricated by arranging multiple cords extending obliquely with respect to the equatorial plane of the tire in parallel with each other, and the circumferential and inclined belt layers being disposed radially outward of a crown portion of the carcass, wherein
the circumferential belt layer has a central region having a width corresponding to a half of the entire tread width with the equatorial plane of the tire being as the center and side regions locating on both side thereof, the placement density of cords of center region is reduced to be 80% or less of that of the side regions in the width direction of the circumferential belt layer.

5. The tire for motorcycle according to any one of claims 1-4, wherein the inclined angle of the cord constituting the inclined belt layer is 20-80 degrees with respect to the equatorial plane of the tire.

6. The tire for motorcycle according to any one of claims 1-5, wherein the cord constituting the circumferential and inclined belt layers has resistance of incipient tension of 50 cN/cord or more.

7. The tire for motorcycle according to any one of claims 1-6, wherein the cord constituting the circumferential belt layer is made of steel, aromatic polyamide, polyethylene naphthalate, polyethylene terephthalate, grass fiber, rayon or aliphatic polyamide.

8. The tire for motorcycle according to any one of claims 1-7, wherein the cord constituting the inclined belt layer is made of aromatic polyamide, polyethylene naphthalate, polyethylene terephthalate, grass fiber, rayon or aliphatic polyamide.

9. The tire for motorcycle according to any one of claims 1-8, wherein the inclined belt layers have a split distance of 1-50 mm and total width of 70-150 % of the entire tread width.

10. The tire for motorcycle according to any one of claims 1-9, wherein modulus of the tread rubber is differentiated between a center region having a width corresponding to a half of the entire tread width with the equatorial plane of the tire being as the center and side regions locating on both sides thereof.
